# EUROPÄISCHE PATENTSCHRIFT

(11) **EP 2 917 062 B1**
(45) Veröffentlichungstag und Bekanntmachung des Hinweises auf die Patenterteilung: **04.03.2020**
(21) Anmeldenummer: 13783888.4
(22) Anmeldetag: 23.10.2013
(51) Int. Cl.: B60K 37/06, G06F 3/0482

(54) **VERFAHREN ZUM ANZEIGEN VON INFORMATIONEN IN EINEM FAHRZEUG UND VORRICHTUNG ZUM STEUERN DER ANZEIGE**
METHOD FOR DISPLAYING INFORMATION IN A VEHICLE, AND A DEVICE FOR CONTROLLING THE DISPLAY
PROCÉDÉ D'AFFICHAGE D'INFORMATIONS DANS UN VÉHICULE ET DISPOSITIF DE COMMANDE DE L'AFFICHAGE

(30) Priorität: 06.11.2012 DE 102012021627
(43) Veröffentlichungstag der Anmeldung: 16.09.2015
(73) Patentinhaber: Volkswagen Aktiengesellschaft, 38440 Wolfsburg (DE)
(72) Erfinder: WENGELNIK, Heiko, 38442 Wolfsburg (DE); MEDLER, Andreas, 38268 Lengede (DE); SIEGEL, Ralf, 01097 Dresden (DE)
(86) Internationale Anmeldenummer: PCT/EP2013/072176
(87) Internationale Veröffentlichungsnummer: WO 2014/072177

(56) Entgegenhaltungen:
- WO-A2-2009/062677
- US-A1- 2012 176 382

## Beschreibung

Die vorliegende Erfindung betrifft ein Verfahren zum Steuern von Informationen in einem Fahrzeug. Bei dem Verfahren sind Listeneinträge einer Liste graphischen Objekten zugeordnet. In einer Hauptansicht wird eine Teilmenge der graphischen Objekte von einer in dem Fahrzeug angeordneten Anzeigevorrichtung angezeigt. Durch eine Eingabe mittels einer Eingabeeinrichtung verändert eine Steuervorrichtung die Graphikdaten so, dass sich die graphischen Objekte der angezeigten Teilmenge verändern. Des Weiteren betrifft die Erfindung eine Vorrichtung zum Steuern der Anzeige von Informationen in einem Fahrzeug. Die Vorrichtung umfasst eine Anzeigevorrichtung, die in dem Fahrzeug befestigt ist. Sie ist insbesondere in das Fahrzeug integriert. Ferner umfasst die Vorrichtung eine Steuervorrichtung, mit welcher Graphikdaten für auf der Anzeigevorrichtung darstellbare graphische Objekte erzeugbar sind. Dabei sind Listeneinträge einer Liste graphischen Objekten zugeordnet. Ferner wird in einer Hauptansicht eine Teilmenge der graphischen Objekte von der Anzeigevorrichtung angezeigt. Die Vorrichtung umfasst schließlich eine mit der Steuervorrichtung gekoppelten Eingabeeinrichtung, wobei auf eine Eingabe mittels der Eingabeeinrichtung die Steuervorrichtung die Graphikdaten so verändert, dass sich die graphischen Objekte der angezeigten Teilmenge verändern.

In einem Fahrzeug, insbesondere einem Kraftfahrzeug, gibt es eine Vielzahl von Funktionseinrichtungen, die erforderlich sind, um das Fahrzeug zu führen, die der Sicherheit und dem Komfort der Fahrzeuginsassen dienen und die den Fahrzeuginsassen schließlich Informationen und Warnungen anzeigen. Außerdem dienen die Funktionseinrichtungen der Kommunikation der Fahrzeuginsassen mit außerhalb des Fahrzeugs angeordneten Einrichtungen. Zu diesen Funktionseinrichtungen zählen beispielsweise Einrichtungen zum Steuern der lichttechnischen Einrichtungen des Fahrzeugs, eine Klimatisierungsvorrichtung, Fahrerassistenzsysteme, ein Navigationssystem, ein Telekommunikationssystem und ein Multimediasystem. Um diese Funktionseinrichtungen zu bedienen ist zumindest eine Vorrichtung für Eingaben des Nutzers und eine Anzeigevorrichtung zum Darstellen von Informationsanzeigen der Funktionseinrichtungen erforderlich. Ferner wird die Bedienung der Funktionseinrichtungen häufig von Anzeigen auf einem Display unterstützt, welches beispielsweise in der Mittelkonsole des Fahrzeugs angeordnet ist.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Werden solche Menüstrukturen in einem Kraftfahrzeug eingesetzt, ergibt sich das Problem, dass die Navigation innerhalb dieser Menüstrukturen und die Aufnahme der von der Anzeigevorrichtung angezeigten Informationen die Aufmerksamkeit des Fahrers beeinträchtigen kann. Es ist daher wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigevorrichtung dargestellt werden, auch während der Fahrt bedienen kann, selbst wenn von der Anzeigevorrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Aus der DE 10 2007 039 442 A1 ist ein Verfahren und eine Anzeigevorrichtung bekannt, bei denen die graphischen Objekte auf einem virtuellen, perspektivisch dargestellten Ring angeordnet dargestellt werden. Auf eine Eingabe mittels der Eingabeeinrichtung verändert eine Recheneinheit einer Benutzerschnittstelleneinrichtung die Graphikdaten so, dass sie sich die graphischen Objekte auf dem virtuellen Ring karussellartig drehen. US 2012/176382 A1 beschreibt ein Verfahren zur Konfiguration einer Benutzerschnittstelle und aus WO 2009/062677 A2 ist eine multimodal Benutzerschnittstelle bekannt.

Der vorliegenden Erfindung liegt das technische Problem zugrunde, ein Verfahren und eine Vorrichtung der eingangs genannten Art bereitzustellen, bei denen dem Nutzer die graphischen Objekte der Liste so angezeigt werden können, dass dieser sie schnell und intuitiv erfassen kann.

Erfindungsgemäß wird dieses Problem durch ein Verfahren mit den Merkmalen des Anspruchs 1 und eine Vorrichtung mit den Merkmalen des Anspruchs 9 gelöst. Vorteilhafte Ausgestaltungen und Weiterbildungen ergeben sich aus den abhängigen Ansprüchen.

Das erfindungsgemäße Verfahren umfasst, dass durch eine Eingabe mittels der Eingabeeinrichtung die Steuervorrichtung in einen Konfigurationsmodus wechselt, in welchem festgelegt wird, welche graphischen Objekte der Teilmenge zugeordnet sind, deren graphischen Objekte in der Hauptansicht angezeigt werden. Das erfindungsgemäße Verfahren ist dadurch gekennzeichnet, dass die Anzeigevorrichtung eine Anzeigefläche mit einer berührungsempfindlichen Oberfläche umfasst und die Eingabe für den Wechsel in den Konfigurationsmodus eine gleichzeitige Berührung der berührungsempfindlichen Oberfläche umfasst, wobei die berührungsempfindliche Oberfläche sowohl bei einem graphischen Objekt für einen Listeneintrag als auch außerhalb eines solchen graphischen Objekts berührt wird.

Das Verfahren ermöglicht, dass die Eingabe für den Wechsel in den Konfigurationsmodus eine sogenannte Multitouchgeste umfasst. Mittels dieser Eingaben kann der Nutzer schnell und intuitiv den Konfigurationsmodus aufrufen.

Das erfindungsgemäße Verfahren ist insbesondere für die Informationsdarstellung auf einer Anzeigefläche in einem Fahrzeug ausgebildet. Die Anzeigeflächen in Fahrzeugen sind häufig nämlich relativ klein, so dass die zur Verfügung stehende Anzeigefläche besonders gut ausgenutzt werden muss. Dabei ist jedoch zu berücksichtigen, dass insbesondere der Fahrer des Fahrzeugs die dargestellten Informationen auch dann wahrnehmen soll, wenn er nur kurzzeitig seinen Blick auf die Anzeigefläche richtet. Ferner soll ein Bedienvorgang, welcher von der Informationsanzeige unterstützt wird für die Bedingungen in einem Fahrzeug optimiert werden.

Bei dem erfindungsgemäßen Verfahren lässt sich die Hauptansicht für den Nutzer des Fahrzeugs individuell anpassen. Jeder Nutzer greift regelmäßig auf unterschiedliche Listeneinträge der Liste zu. Ferner kann jeder Nutzer unterschiedlich viele graphische Objekte, die gleichzeitig auf einer Anzeigefläche angezeigt werden, schnell und intuitiv erfassen. Durch den Konfigurationsmodus des erfindungsgemäßen Verfahrens ist es dem Nutzer möglich, die Hauptansicht der Informationsanzeige in dem Fahrzeug zu individualisieren.

Die graphischen Objekte die nicht der angezeigten Teilmenge angehören, können durch einen Bedienvorgang zur Anzeige gebracht werden. Beispielsweise kann mittels der Eingabeeinrichtung ein Bildlauf erzeugt werden oder es können andere Teilmengen der Liste sequentiell zur Anzeige gebracht werden.

Die Hauptansicht des erfindungsgemäßen Verfahrens wird insbesondere angezeigt, wenn die Anzeigevorrichtung eingeschaltet wird. Die Anzeigeeinrichtung kann beispielsweise dann eingeschaltet werden, wenn der Nutzer das Fahrzeug einschaltet, indem er beispielsweise einen Startknopf drückt oder den Zündschlüssel in eine bestimmte Stellung bringt. Üblicherweise sind die Listeneinträge, die zu den in der Hauptansicht angezeigten graphischen Objekten gehören, fest vorgegeben und nicht veränderbar. Bei dem erfindungsgemäßen Verfahren ist es im Konfigurationsmodus jedoch möglich, auch diese Hauptansicht zu individualisieren.

Gemäß einer weiteren Ausgestaltung des erfindungsgemäßen Verfahrens werden im Konfigurationsmodus die Listeneinträge der Liste verändert. In diesem Fall können nicht nur die Listeneinträge, die zu den graphischen Objekten gehören, welche von der angezeigten Teilmenge umfasst sind, sondern die Listeneinträge der ganzen Liste verändert werden. Beispielsweise können Listeneinträge aus der Liste entfernt werden und zu dieser Liste hinzugefügt werden. Des Weiteren können den graphischen Objekten der Listeneinträge der Liste Positionen in einer Reihe oder auf einer Fläche zugeordnet sein. In diesem Fall können im Konfigurationsmodus auch diese Positionen festgelegt werden. Die jeweils angezeigten graphischen Objekte werden dann entsprechend diesen Positionen von der Anzeigevorrichtung angezeigt. Auch auf diese Weise lässt sich die Hauptansicht mit den graphischen Objekten der Teilmenge sowie auch weitere Ansichten mit graphischen Objekten für Listeneinträge der Liste individualisieren.

Gemäß einer weiteren Ausgestaltung des erfindungsgemäßen Verfahrens wird im Konfigurationsmodus als ein neuer Listeneintrag ein Ordner definiert, dem Listeneinträge der Liste zugeordnet werden. Die graphischen Objekte der Listeneinträge, die dem Ordner zugeordnet sind, werden dann nicht in der Hauptansicht angezeigt. Sie werden erst angezeigt, nachdem der Listeneintrag des Ordners ausgewählt wurde. Auf diese Weise können vorteilhafterweise verschiedene Listeneinträge der Liste gruppiert werden, um die Gesamtanzahl der graphischen Objekte, die in einer Hierarchieebene angezeigt werden, zu verringern.

Gemäß einer weiteren Ausgestaltung des erfindungsgemäßen Verfahrens umfasst die Anzeigevorrichtung eine Anzeigefläche mit einer berührungsempfindlichen Oberfläche. Die Eingabe für den Wechsel in den Konfigurationsmodus kann dann durch verschiedene Bedienvorgänge erfolgen:
Gemäß einer Ausgestaltung umfasst die Eingabe für den Wechsel in den Konfigurationsmodus eine Berührung der berührungsempfindlichen Oberfläche bei einem graphischen Objekt für einen Listeneintrag für mindestens ein definiertes Zeitintervall. Es ist beispielsweise möglich, dass ein Listeneintrag durch ein kurzzeitiges Antippen des zugehörigen graphischen Objekts ausgewählt wird, woraufhin eine diesem Listeneintrag zugeordnete Funktion ausgeführt wird. Wird in diesem Fall das graphische Objekt für längere Zeit berührt, wechselt die Steuervorrichtung in den Konfigurationsmodus.

Ferner kann die Eingabe für den Wechsel in den Konfigurationsmodus einen sogenannten Doppelklick auf ein graphisches Objekt umfassen. In diesem Fall berührt der Nutzer zum Beispiel mit seiner Fingerspitze die berührungsempfindliche Oberfläche bei dem graphischen Objekt zweimal kurz hintereinander.

Gemäß einer Weiterbildung des erfindungsgemäßen Verfahrens werden die graphischen Objekte im Konfigurationsmodus anders dargestellt als bei der Hauptansicht. Beispielsweise kann eine Animation wiedergegeben werden, bei welcher die graphischen Objekte wackelnd erscheinen, sich drehen und/oder pulsierend erscheinen. Des Weiteren kann sich die Größe und/oder Farbe des graphischen Objekts im Konfigurationsmodus verändern. Auf diese Weise kann der Nutzer schnell und intuitiv erfassen, dass sich die Steuervorrichtung im Konfigurationsmodus befindet, in welchem der Nutzer insbesondere die graphischen Objekte der angezeigten Teilmenge in der Hauptansicht verändern kann. Alternativ kann im Konfigurationsmodus auch ein separates Setup-Menü angezeigt werden.

Die erfindungsgemäße Vorrichtung umfasst, dass durch eine Eingabe mittels der Eingabeeinrichtung die Steuervorrichtung in einen Konfigurationsmodus bringbar ist, in dem festlegbar ist, welche graphischen Objekte der Teilmenge zugeordnet sind, deren graphischen Objekte in der Hauptansicht angezeigt werden. Die erfindungsgemäße Vorrichtung ist dadurch gekennzeichnet, dass die Anzeigevorrichtung eine Anzeigefläche mit einer berührungsempfindlichen Oberfläche umfasst und die Eingabe für den Wechsel in den Konfigurationsmodus eine gleichzeitige Berührung der berührungsempfindlichen Oberfläche umfasst, wobei die berührungsempfindliche Oberfläche sowohl bei einem graphischen Objekt für einen Listeneintrag als auch außerhalb eines solchen graphischen Objekts berührt wird.

Die Vorrichtung ermöglicht, dass die Eingabe für den Wechsel in den Konfigurationsmodus eine sogenannte Multitouchgeste umfasst. Mittels dieser Eingaben kann der Nutzer schnell und intuitiv den Konfigurationsmodus aufrufen.

Die erfindungsgemäße Vorrichtung ist insbesondere ausgebildet das vorstehend beschriebene erfindungsgemäße Verfahren auszuführen. Sie weist deshalb auch dieselben Vorteile wie das erfindungsgemäße Verfahren auf. Die Vorrichtung ist insbesondere in das Fahrzeug integriert, das heißt fest in das Fahrzeug eingebaut.

Die Erfindung wird nun anhand eines Ausführungsbeispiels mit Bezug zu den Zeichnungen erläutert.
- Figur 1: zeigt schematisch ein Ausführungsbeispiel der erfindungsgemäßen Vorrichtung und die Koppelung dieser Vorrichtung mit der Elektronik des Fahrzeugs,
- Figur 2: zeigt eine von dem erfindungsgemäßen Verfahren erzeugte Informationsanzeige in einem Fahrzeug, bei der mehrere Objekte dargestellt werden,
- Figur 3: zeigt eine von dem erfindungsgemäßen Verfahren erzeugte Informationsanzeige im Konfigurationsmodus und
- Figur 4: zeigt eine von dem erfindungsgemäßen Verfahren erzeugte Informationsanzeige nach einer Änderung der Konfiguration.

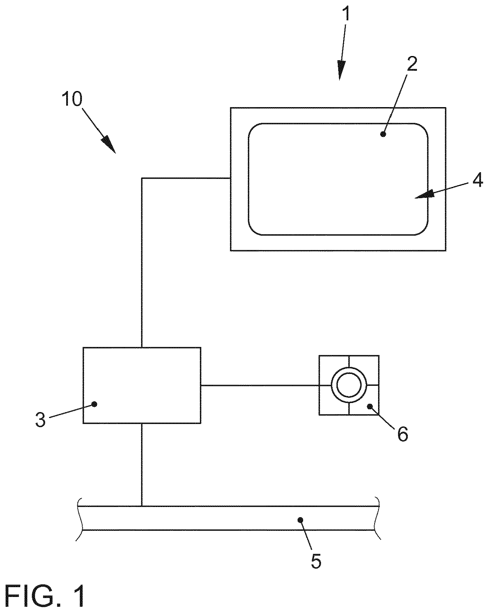

Mit Bezug zu Figur 1 wird ein Ausführungsbeispiel der erfindungsgemäßen Vorrichtung 10 und deren Anordnung in einem Fahrzeug erläutert:
Die Vorrichtung 10 umfasst eine Anzeigevorrichtung 1 mit einer Anzeigefläche 2, die so im Innenraum des Fahrzeugs angeordnet ist, dass sie für zumindest einen Fahrzeuginsassen, insbesondere dem Fahrer, gut sichtbar ist. Die Anzeigefläche 2 kann von einem Display, insbesondere einem Flüssigkristalldisplay, beliebiger Bauart bereitgestellt werden.

Die Vorrichtung 10 umfasst ferner eine Steuervorrichtung 3, die mit der Anzeigevorrichtung 1 verbunden ist. Mit der Steuervorrichtung 3 sind Graphikdaten zur Informationsdarstellung auf der Anzeigefläche 2 erzeugbar.

Die Vorrichtung 10 weist außerdem eine Eingabeeinrichtung auf. Diese Eingabeeinrichtung kann beispielsweise eine berührungsempfindliche Oberfläche 4 umfassen, die auf der Anzeigefläche 2 ausgebildet ist. In diesem Fall wird somit ein sogenannter Touchscreen bereitgestellt. Ferner kann die Eingabeeinrichtung ein abgesetztes mechanisches Bedienelement 6, wie beispielsweise einen Dreh-Drück-Schalter, umfassen.

Die Steuervorrichtung 3 ist des Weiteren mit einem Datenbus 5 des Fahrzeugs gekoppelt, über den Daten mit anderen Funktionseinrichtungen des Fahrzeugs ausgetauscht werden können.

Beispielsweise kann die Steuervorrichtung 3 über den Datenbus 5 mit einer Multimediaeinrichtung, einer Klimaanlage und einem Navigationssystem des Fahrzeugs gekoppelt sein, zu der Informationen auf der Anzeigefläche 2 angezeigt werden und deren Bedienung durch Anzeigen auf der Anzeigefläche 2 unterstützt werden.

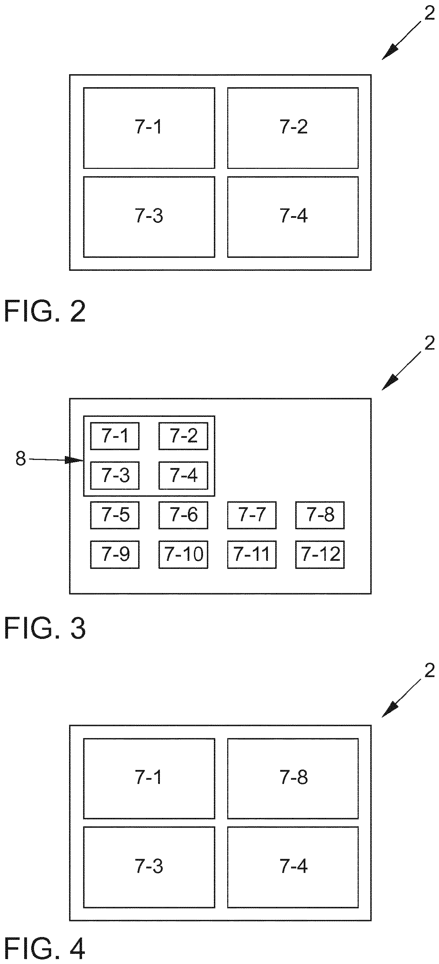

Im Folgenden wird mit Bezug zu den Figuren 2 bis 4 ein Ausführungsbeispiel des erfindungsgemäßen Verfahrens erläutert, welches mittels der vorstehend beschriebenen Anzeigeeinrichtung 10 ausgeführt werden kann:
In der Steuervorrichtung 3 ist eine Liste gespeichert, welche eine Vielzahl von Listeneinträgen für eine Hauptansicht speichert. Jedem Listeneintrag ist ein graphisches Objekt 7 zugeordnet. Auch dieses graphische Objekt 7 ist in der Steuervorrichtung 3 gespeichert. Die einzelnen graphischen Objekte 7 werden auch mit 7-1, 7-2, ... bezeichnet.

Wenn das Fahrzeug, welches die Vorrichtung 10 umfasst, eingeschaltet wird, indem beispielsweise der Zündschlüssel in eine bestimmte Stellung gebracht wird, wird auch die Anzeigevorrichtung 1 eingeschaltet und es erscheint unmittelbar auf der Anzeigefläche 2 die in Figur 2 dargestellte Hauptansicht. In dieser Hauptansicht wird eine Teilmenge der graphischen Objekte 7 auf der Anzeigefläche 2 angezeigt. Im vorliegenden Ausführungsbeispiel werden die graphischen Objekte 7-1 bis 7-4 angezeigt. Die weiteren graphischen Objekte 7-5 bis 7-12 werden hingegen nicht unmittelbar in der Hauptansicht angezeigt.

Durch eine Eingabe auf der berührungsempfindlichen Oberfläche 4 oder mittels des Bedienelements 6 kann der Nutzer die Anzeige auf der Anzeigefläche 2 so verändern, dass andere graphische Objekte 7 auf der Anzeigefläche 2 angezeigt werden. Beispielsweise können die graphischen Objekte 7 in Gruppen eingeteilt werden, durch die durch einen Bedienvorgang geblättert werden kann. Ferner wäre es möglich, dass der Nutzer zum Beispiel durch eine Wischgeste auf der berührungsempfindlichen Oberfläche 4 einen Bildlauf erzeugt, bei dem neue graphische Objekte 7 auf der Anzeigefläche 2 erscheinen und andere graphische Objekte 7 verschwinden. Auch nach einer solchen Veränderung der Anzeige auf der Anzeigefläche 2 bleibt die Teilmenge mit den graphischen Objekten 7-1 bis 7-4 jedoch bestehen, die in der Hauptansicht angezeigt wird, welche beim Einschalten der Anzeigevorrichtung 1 wiedergegeben wird. Es kann sich hierbei allerdings auch im die Teilmenge der höchsten Hierarchieebene einer Anzeige- und Bedienstruktur handeln.

Bei dem erfindungsgemäßen Verfahren ist es jedoch möglich, diese Hauptansicht zu verändern. Durch einen bestimmten Bedienvorgang kann der Nutzer die Steuervorrichtung 3 in einen Konfigurationsmodus versetzen. Berührt der Nutzer beispielsweise die berührungsempfindliche Oberfläche 4 bei einem der angezeigten graphischen Objekte 7-1 bis 7-4 für ein längeres Zeitintervall, wechselt die Steuervorrichtung 3 in den Konfigurationsmodus. Alternativ kann der Wechsel in den Konfigurationsmodus auch durch einen sogenannten Doppelklick auf eines der angezeigten graphischen Objekte 7 erfolgen oder durch eine Multitouchgeste, bei welcher zum Beispiel eine Fingerspitze des Nutzers die berührungsempfindliche Oberfläche 4 bei der Position eines angezeigten graphischen Objekts 7 berührt und gleichzeitig eine andere Fingerspitze eine Position auf der berührungsempfindlichen Oberfläche 4 berührt, bei der kein graphisches Objekt 7 angezeigt wird.

Der Wechsel in den Konfigurationsmodus wird dadurch visualisiert, dass die angezeigten graphischen Objekte 7 wackelnd, sich drehend oder pulsierend dargestellt werden oder ein Setup-Menü angezeigt wird, wie es in Figur 3 gezeigt ist,. Bei der Anzeige zu einem solchen Setup-Menü wird die eingestellte Hauptansicht durch einen Rahmen 8 visualisiert. Innerhalb dieses Rahmens 8 werden die graphischen Objekte 7-1 bis 7-4 der Teilmenge dargestellt, die in der Hauptansicht angezeigt wird.

Der Nutzer kann nun auf an sich bekannte Weise mittels der berührungsempfindlichen Oberfläche 4 graphische Objekte 7 aus dem Rahmen 8 entfernen und andere graphische Objekte 7 in den Rahmen 8 verschieben. Außerdem kann der Nutzer bestimmte graphische Objekte 7 aus der Gesamtliste entfernen und gegebenenfalls andere graphische Objekte der Liste hinzufügen. Ferner können neue Listeneinträge gebildet werden, die als Ordner dienen, in denen mehrere Listeneinträge zusammengefasst werden können. Die zu diesen Listeneinträgen gehörenden graphischen Objekte 7 werden dann nicht mehr angezeigt. Stattdessen wird der Listeneintrag für den Ordner angezeigt. Wird dieser Ordner ausgewählt, erscheinen die graphischen Objekte 7, welche in diesen Ordner verschoben wurden.

Im vorliegenden Ausführungsbeispiel entfernt der Nutzer das graphische Objekt 7-2 aus dem Rahmen 8 für die Hauptansicht und verschiebt stattdessen das graphische Objekt 7-8 in den Rahmen 8. Des Weiteren kann der Nutzer auch die Positionen der graphischen Objekte 7 in den Rahmen 8 für die Hauptansicht festlegen.

Bei einer alternativen Ausgestaltung wird im Konfigurationsmodus nur die Teilmenge mit den graphischen Objekten 7 der Hauptansicht angezeigt und der Nutzer kann die graphischen Objekte 7 dann durch eine Schiebegeste auf der berührungsempfindlichen Oberfläche 4 aus der Teilmenge für die Hauptansicht entfernen.

Durch eine weitere Eingabe kann der Nutzer den Konfigurationsmodus wieder beenden. Daraufhin wird, wie in Figur 4 gezeigt, die neue Hauptansicht auf der Anzeigefläche 2 angezeigt.

Die graphischen Objekte 7 können in der Hauptansicht anstatt in dem in den Figuren 2 und 4 dargestellten Raster alternativ auch auf einem Karussell, einer Linie oder auf beliebige andere Weise angezeigt werden.

### Bezugszeichenliste

- 1: Anzeigevorrichtung
- 2: Anzeigefläche
- 3: Steuervorrichtung
- 4: berührungsempfindliche Oberfläche
- 5: Datenbus
- 6: abgesetztes Bedienelement
- 7, 7-1 bis 7-12: graphische Objekte
- 10: Vorrichtung

## Patentansprüche

1. Verfahren zum Anzeigen von Informationen in einem Fahrzeug, bei dem
- Listeneinträge einer Liste graphischen Objekten (7) zugeordnet sind und in einer Hauptansicht eine Teilmenge der graphischen Objekte (7) von einer in dem Fahrzeug angeordneten Anzeigevorrichtung (1) angezeigt wird, und
- durch eine Eingabe mittels einer Eingabeeinrichtung (4, 6) eine Steuervorrichtung (3) die Graphikdaten so verändert, dass sich die graphischen Objekte (7) der angezeigten Teilmenge verändern,
wobei
- durch eine Eingabe mittels der Eingabeeinrichtung (4, 6) die Steuervorrichtung (3) in einen Konfigurationsmodus wechselt, in dem festgelegt wird, welche graphischen Objekte (7) der Teilmenge zugeordnet sind, deren graphischen Objekte (7) in der Hauptansicht angezeigt werden,
**dadurch gekennzeichnet,**
**dass** die Anzeigevorrichtung (1) eine Anzeigefläche (2) mit einer berührungsempfindlichen Oberfläche (4) umfasst und die Eingabe für den Wechsel in den Konfigurationsmodus eine gleichzeitige Berührung der berührungsempfindlichen Oberfläche (4) umfasst, wobei die berührungsempfindliche Oberfläche (4) sowohl bei einem graphischen Objekt (7) für einen Listeneintrag als auch außerhalb eines solchen graphischen Objekts (7) berührt wird.

2. Verfahren nach Anspruch 1,
**dadurch gekennzeichnet,**
**dass** die Hauptansicht angezeigt wird, wenn die Anzeigevorrichtung (1) eingeschaltet wird.

3. Verfahren nach Anspruch 1 oder 2,
**dadurch gekennzeichnet,**
**dass** im Konfigurationsmodus die Listeneinträge der Liste verändert werden.

4. Verfahren nach einem der vorhergehenden Ansprüche,
**dadurch gekennzeichnet,**
**dass** im Konfigurationsmodus als ein neuer Listeneintrag ein Ordner definiert wird, dem Listeneinträge der Liste zugeordnet werden, und die graphischen Objekte (7) der Listeneinträge, die dem Ordner zugeordnet sind, nicht in der Hauptansicht angezeigt werden.

5. Verfahren nach einem der vorhergehenden Ansprüche,
**dadurch gekennzeichnet**,
das die Anzeigevorrichtung (1) eine Anzeigefläche (2) mit einer berührungsempfindlichen Oberfläche (4) umfasst und die Eingabe für den Wechsel in den Konfigurationsmodus eine Berührung der berührungsempfindlichen Oberfläche (4) bei einem graphischen Objekt (7) für einen Listeneintrag für mindestens ein definiertes Zeitintervall umfasst.

6. Verfahren nach einem der vorhergehenden Ansprüche,
**dadurch gekennzeichnet,**
**dass** die Anzeigevorrichtung (1) eine Anzeigefläche (2) mit einer berührungsempfindlichen Oberfläche (4) umfasst und die Eingabe für den Wechsel in den Konfigurationsmodus einen Doppelklick auf ein graphisches Objekt (7) umfasst.

7. Verfahren nach einem der vorhergehenden Ansprüche,
**dadurch gekennzeichnet,**
**dass** die graphischen Objekte (7) im Konfigurationsmodus anders dargestellt werden als bei der Hauptansicht.

8. Verfahren nach einem der vorhergehenden Ansprüche,
**dadurch gekennzeichnet,**
**dass** im Konfigurationsmodus ein separates Setup-Menü angezeigt wird.

9. Vorrichtung zum Steuern der Anzeige von Informationen in einem Fahrzeug mit
- einer Anzeigevorrichtung (1), die in dem Fahrzeug befestigt ist,
- einer Steuervorrichtung (3), mit welcher Graphikdaten für auf der Anzeigevorrichtung (1) darstellbare graphische Objekte (7) erzeugbar sind, wobei Listeneinträge einer Liste graphischen Objekten (7) zugeordnet sind und in einer Hauptansicht eine Teilmenge der graphischen Objekte (7) von der Anzeigevorrichtung (1) angezeigt wird, und
- einer mit der Steuervorrichtung (3) gekoppelten Eingabeeinrichtung (4, 6), wobei auf eine Eingabe mittels der Eingabeeinrichtung (4, 6) die Steuervorrichtung (3) die Graphikdaten so verändert, dass sich die graphischen Objekte (7) der angezeigten Teilmenge verändern,
wobei
- durch eine Eingabe mittels der Eingabeeinrichtung (4, 6) die Steuervorrichtung (3) in einen Konfigurationsmodus bringbar ist, in welchem festlegbar ist, welche graphischen Objekte (7) der Teilmenge zugeordnet sind, deren graphischen Objekte (7) in der Hauptansicht angezeigt werden,
**dadurch gekennzeichnet,**
**dass** die Anzeigevorrichtung (1) eine Anzeigefläche (2) mit einer berührungsempfindlichen Oberfläche (4) umfasst und die Eingabe für den Wechsel in den Konfigurationsmodus eine gleichzeitige Berührung der berührungsempfindlichen Oberfläche (4) umfasst, wobei die berührungsempfindliche Oberfläche (4) sowohl bei einem graphischen Objekt (7) für einen Listeneintrag als auch außerhalb eines solchen graphischen Objekts (7) berührt wird.

## Claims

1. A method for displaying information in a vehicle, in which
- list entries of a list are allocated to graphical objects (7) and in a main view a partial amount of said graphical objects (7) is displayed by a display device (1) arranged in the vehicle, and
- as a result of an input by means of an input device (4, 6) a control device (3) modifies the graphical data such that the graphical objects (7) of the displayed partial amount is modified,
wherein
- as a result of an input by means of an input device (4, 6) the control device (3) changes to a configuration mode, in which it is determined which graphical objects (7) are allocated to the partial amount, the graphical objects (7) of which are displayed in the main view,
**characterized in**
**that** the display device (1) comprises a display surface (2) with a touch-sensitive surface (4) and the input for the change to the configuration mode comprises a simultaneous touch of the touch-sensitive surface (4), wherein the touch-sensitive surface (4) is touched both on a graphical object (7) for a list entry as well as outside of such a graphical object (7)

2. The method according to Claim 1,
**characterized in**
**that** the main view is displayed, if the display device (1) is turned on.

3. The method according to Claim 1 or 2,
**characterized in**
**that** the list entries of the list are modified in the configuration mode.

4. The method according to any one of the preceding claims,
**characterized in**
**that** in the configuration mode a folder is defined as a new list entry, to which list entries of the lists are allocated, and the graphical objects (7) of the list entries, which are allocated to the folder, are not displayed in the main view.

5. The method according to any one of the preceding claims,
**characterized in**
**that** the display device (1) comprises a display surface (2) with a touch-sensitive surface (4) and the input for the change to the configuration mode comprises a touch of the touch-sensitive surface (4) on a graphical object (7) for a list entry for at least one defined time interval.

6. The method according to any one of the preceding claims,
**characterized in**
**that** the display device (1) comprises a display surface (2) with a touch-sensitive surface (4) and the input for the change to the configuration mode comprises a double click on a graphical object (7).

7. The method according to any one of the preceding claims,
**characterized in**
**that** the graphical objects (7) are displayed differently in the configuration mode than in the main view.

8. The method according to any one of the preceding claims,
**characterized in**
**that** a separate setup menu is displayed in the configuration mode.

9. A device for controlling the display of information in a vehicle having
- a display device (1), which is mounted in the vehicle,
- a control device (3), with which graphic data for graphical objects (7) displayable on the display device (1) can be generated, wherein list entries of a list are allocated to graphical objects (7) and in a main view a partial amount of the graphical objects (7) is displayed by the display device (1), and
- an input device (4, 6) coupled with the control device (3), wherein the control device (3) changes the graphic data on an input by means of the input device (4, 6) such that the graphical objects (7) of the displayed partial amount are modified, wherein
- as a result of an input by means of the input device (4, 6) the control device (3) can be brought into a configuration mode, in which it can be determined which graphical objects (7) are allocated to the partial amount, the graphical objects (7) of which are displayed in the main view,
**characterized in**
**that** the display device (1) comprises a display surface (2) with a touch-sensitive surface (4) and the input for the change to the configuration mode comprises a simultaneous touch of the touch-sensitive surface (4), wherein the touch-sensitive surface (4) is touched both on a graphical object (7) for a list entry as well as outside such a graphical object (7).

## Revendications

1. Procédé d'affichage d'informations dans un véhicule, dans lequel
- des entrées de liste d'une liste sont affectées à des objets graphiques (7) et une quantité partielle des objets graphiques (7) est affichée dans une présentation principale par un dispositif d'affichage (1) disposé dans le véhicule et,
- par une entrée au moyen d'un système d'entrée (4, 6),
un dispositif de commande (3) modifie les données graphiques de telle sorte que les objets graphiques (7) de la quantité partielle affichée se modifient,
dans lequel
- par une entrée au moyen du système d'entrée (4, 6), le dispositif de commande (3) passe à un mode de configuration dans lequel il est stipulé quels objets graphiques (7) de la quantité partielle sont affectés dont les objets graphiques (7) sont affichés dans la présentation principale,
**caractérisé en ce que**
le dispositif d'affichage (1) comprend une zone d'affichage (2) avec une surface (4) tactile, et l'entrée pour le passage au mode de configuration comprend un toucher simultané de la surface (4) tactile, dans lequel la surface (4) tactile est touchée aussi bien dans le cas d'un objet graphique (7) pour une entrée de liste qu'à l'extérieur d'un tel objet graphique (7) .

2. Procédé selon la revendication 1,
**caractérisé en ce que**
la présentation principale est affichée quand le dispositif d'affichage (1) est mis en circuit.

3. Procédé selon la revendication 1 ou 2,
**caractérisé en ce que**
les entrées de liste de la liste sont modifiées dans le mode de configuration.

4. Procédé selon l'une des revendications précédentes,
**caractérisé en ce que**,
dans le mode de configuration, un dossier est défini en tant que nouvelle entrée de liste auquel des entrées de liste de la liste sont affectées, et les objets graphiques (7) des entrées de liste qui sont affectées au dossier ne sont pas affichés dans la présentation principale.

5. Procédé selon l'une des revendications précédentes,
**caractérisé en ce que**
le dispositif d'affichage (1) comprend une zone d'affichage (2) avec une surface (4) tactile, et l'entrée pour le passage au mode de configuration comprend un toucher de la surface (4) tactile dans le cas d'un objet graphique (7) pour une entrée de liste pendant au moins un intervalle de temps défini.

6. Procédé selon l'une des revendications précédentes,
**caractérisé en ce que**
le dispositif d'affichage (1) comprend une zone d'affichage (2) avec une surface (4) tactile, et l'entrée pour le passage au mode de configuration comprend un double clic sur un objet graphique (7).

7. Procédé selon l'une des revendications précédentes,
**caractérisé en ce que**,
dans le mode de configuration, les objets graphiques (7) sont représentés d'une façon différente que dans le cas de la présentation principale.

8. Procédé selon l'une des revendications précédentes,
**caractérisé en ce que**,
dans le mode de configuration, un menu de configuration séparé est affiché.

9. Dispositif de commande de l'affichage d'informations dans un véhicule, avec
- un dispositif d'affichage (1) qui est fixé dans le véhicule,
- un dispositif de commande (3) avec lequel des données graphiques peuvent être produites pour des objets graphiques (7) pouvant être représentés sur le dispositif d'affichage (1), des entrées de liste d'une liste étant affectées à des objets graphiques (7) et une quantité partielle des objets graphiques (7) étant affichée dans une présentation principale par le dispositif d'affichage (1), et
- avec un système d'entrée (4, 6) couplé au dispositif de commande (3), dans lequel, en réaction à une entrée au moyen du système d'entrée (4, 6), le dispositif de commande (3) modifie les données graphiques de telle sorte que les objets graphiques (7) de la quantité partielle affichée se modifient, dans lequel
- par une entrée au moyen du système d'entrée (4, 6), le dispositif de commande (3) peut être amené dans un mode de configuration dans lequel il peut être stipulé quels objets graphiques (7) de la quantité partielle sont affectés dont des objets graphiques (7) sont affichés dans la présentation principale,
**caractérisé en ce que**
le dispositif d'affichage (1) comprend une zone d'affichage (2) avec une surface (4) tactile, et l'entrée pour le passage au mode de configuration comprend un toucher simultané de la surface (4) tactile,
dans lequel la surface (4) tactile est touchée aussi bien dans le cas d'un objet graphique (7) pour une entrée de liste qu'à l'extérieur d'un tel objet graphique (7).
